# EUROPÄISCHE PATENTSCHRIFT

(11) **EP 2 852 485 B1**
(45) Veröffentlichungstag und Bekanntmachung des Hinweises auf die Patenterteilung: **05.04.2017**
(21) Anmeldenummer: 13731696.4
(22) Anmeldetag: 22.05.2013
(51) Int. Cl.: B29C 47/60, B29C 47/66, B29C 47/40, B29C 47/08, B29B 7/48, B29B 7/70

(54) **MEHRWELLENEXTRUDER MIT SELBSTREINIGENDEN FÖRDERWELLEN**
MULTI-SCREW EXTRUDER WITH SELF-CLEANING CONVEYOR SCREWS
EXTRUDEUSE À PLUSIEURS VIS MUNIE D'UNE VIS DE REFOULEMENT AUTONETTOYANTE

(30) Priorität: 23.05.2012 AT 6082012
(43) Veröffentlichungstag der Anmeldung: 01.04.2015
(73) Patentinhaber: Blach Verwaltungs GmbH & Co. KG, 74348 Lauffen a.N. (DE)
(72) Erfinder: BACH, Josef A., 6632 Ehrwald (AT)
(74) Vertreter: LS-MP von Puttkamer Berngruber Loth Spuhler
(86) Internationale Anmeldenummer: PCT/EP2013/060536
(87) Internationale Veröffentlichungsnummer: WO 2013/174878

(56) Entgegenhaltungen:
- EP-A1- 0 788 868
- EP-A1- 1 462 235
- EP-A2- 1 093 905
- EP-A2- 1 541 870
- WO-A1-2011/116965
- DE-A1- 10 103 094
- DE-A1-102008 016 862
- US-A- 4 131 371

## Beschreibung

Die Erfindung bezieht sich auf einen Mehrwellenextruder nach dem Oberbegriff des Anspruches 1.

Die im Markt führenden selbstreinigenden DoppelschneckenExtruder mit dicht kämmenden, gleichsinnig drehenden Förderwellen gehen im Wesentlichen auf DE 813 154 B und DE 862 668 B zurück. Daraus wurde ein modulares Baukastensystem mit einem aus drei Kreisbögen gebildeten Abstreifprofil entwickelt, das heute in großen Bereichen die verfahrenstechnischen Anforderungen erfüllen kann.

Mit einem Abstreifprofil mit vier und mehr profilbestimmenden Kreisbögen nach DE 10 2008 029 303 A1, WO 2009/152974 A2 und WO 2011/039016 A1 kann durch eine stetig differenzierte Profilkurve die Dispergier- und Energieeffizienz erhöht werden.

Bei einem Extruder, bei dem die Förderwellen längs eines geschlossenen Kreises angeordnet sind, besteht die Aufgabe im großvolumigen Zuführbereich des Produktes ein Drittel und mehr des gesamten Durchsatzvolumens in den inneren Teil des zweiteiligen Verfahrensraumes zu transportieren. Dies ergibt sich aus der Forderung einer nachhaltigen Selbstreinigung des Systems, was durch die im Teilkreis am ganzen Profilumfang dichte Verteilung des Verfahrensraumes in einen äußeren Teil und einen inneren Teil erfolgt.

Aus EP 1 434 679 B1 geht ein axial nicht dichtes System hervor. Für ein dichtes System ist kennzeichnend, dass sich der Profilquerschnitt vom Kerndurchmesser aus stetig verjüngt. Gleiches gilt für das selbstreinigende Profil nach EP 1 423 251 B1, worin für den viskos benetzten Entgasungsbereich eine Fülle von Maßnahmen vorgeschlagen werden, die je nach Produktverfahren und Betriebsbedingungen unkontrollierbare Totraumzonen entstehen lassen, die eine nachhaltige Produktion unmöglich machen. Darüber hinaus ist in EP 1 423 251 B1 eine Kammbreite dargestellt, die allenfalls für ein eingängiges Profil möglich sein könnte.

Die Anordnung eines zweigängigen, dicht kämmenden Förderprofils der Förderwellen eines Mehrwellenextruders mit längs eines geschlossenen Kreises angeordneten Förderwellen ist in DE 101 22 462 C2 gezeigt. Gegenüber einem offenen System hat diese Anordnung den Vorteil, dass alle Förderwellen mit zwei Nachbarwellen eng kämmen und je Umdrehung sich in allen Positionen gegenseitig sowie das Gehäuse zweimal eng abstreifen. Das entspricht bei zweigängigen Doppelschnecken der zweifachen Abreinigung des Gehäuses je Umdrehung der Wellen, die sich selbst jedoch gegenseitig nur einmal abstreifen, was im Normalfall auch ausreichend ist.

Die Druckschriften DE 10 2008 016862 A1, US 4 131 371 A und EP 1 462 235 A1 offenbaren weitere Mehrwellenextruder.

Aufgabe der Erfindung ist es, die Misch-Homogenisier- und Dispergiereffizienz eines Mehrwellenextruders wesentlich zu verbessern.

Dies wird erfindungsgemäß mit dem im Anspruch 1 gekennzeichneten Mehrwellenextruder erreicht. In den Unteransprüchen sind vorteilhafte Ausgestaltungen der Erfindung wiedergegeben.

Nach der Erfindung weist der Mehrwellenextruder mehrere, also mindestens drei, parallel angeordnete, gleichsinnig drehende, dicht kämmende Förderwellen auf, die mindestens zweigängig ausgebildet sind und in jeweils einer Bohrung im Extrudergehäuse geführt sind.

Jede Förderwelle ist mit dem Kamm eines ihrer Gänge zur Bohrungswand mit einem geringen radialen Spiel beanstandet.

Das radiale Spiel beträgt dabei vorzugsweise höchstens drei Prozent des Durchmessers der Bohrung.

Demgegenüber ist zwischen dem Kamm eines der anderen Gänge der mindestens zweigängigen Förderwellen und der Bohrungswand ein Spalt gebildet. Dieser Spalt ist wesentlich größer als das erwähnte radiale Spiel zwischen dem wenigstens eines weiteren Kamm der Förderwelle und der Bohrungswand, jedoch kleiner als die Gangtiefe der Förderwelle, also kleiner als die Differenz zwischen Kerndurchmesser und Außendurchmesser der Förderwelle.

Dabei sind benachbarte, miteinander kämmende Förderwellen jeweils um einen solchen Winkel versetzt angeordnet, dass jede zwischen zwei Förderwellen angeordnete Förderwelle durch die Spalt bildenden Kämme der beiden benachbarten Förderwellen an ihren Flanken zwischen ihren Kämmen in mindestens einer Drehposition mit dem fließfähigen, zu verarbeitenden Material beschichtet wird, wobei die Flanken in mindestens einer weiteren Drehposition der Förderwelle durch die zur Bohrungswand mit radialen Spiel benachbarten Kämme der beiden benachbarten Förderwellen von dem fließfähigen Material wieder abgereinigt werden.

Der Spalt zwischen Kamm und Gehäusebohrung hat verfahrenstechnische Aufgaben.

Neben dem radialen Spiel weisen die Förderwellen ein axiales Spiel auf, das für die Selbstreinigung maßgebend ist. Dabei werden insbesondere Fertigungstoleranzen, eine unterschiedliche Verdrillung der Förderwellen, Toleranzen in der Axiallagerung der Wellen und Wärmedehnungen kompensiert, also verhindert, dass die Wellen gegeneinander anlaufen.

Die Förderwellen können zwar auch drei oder viergängig ausgebildet sein, vorzugsweise kommen jedoch zweigängige Förderwellen zum Einsatz, also Förderwellen mit jeweils einem ersten Kamm, der zur Gehäusebohrung lediglich ein radiales Spiel aufweist und einem zweiten Kamm, durch den der besagte Spalt zur Gehäusebohrung gebildet wird.

Die benachbarten, ineinander kämmenden zweigängigen Förderwellen sind dabei in einem Winkel von 90 Grad zueinander versetzt.

Damit wird jede zwischen zwei Förderwellen angeordnete zweigängige Förderwelle in einer Drehposition an ihren beiden Flanken zwischen den beiden Kämmen durch die einen Spalt zur Gehäusebohrung bildenden ersten Kämme der beiden benachbarten, um 90 Grad versetzten Förderwellen mit dem fließfähigen, zu verarbeitenden Material beschichtet. Durch Drehung der Förderwellen aus dieser Position um 180 Grad erfolgt durch die zur Bohrungswand mit Spiel beabstandeten zweiten Kämme der beiden benachbarten Förderwellen dann die Abreinigung der beiden Flanken der dazwischen angeordneten Förderwelle von dem fließfähigen Material.

Die Förderwellen des Mehrwellenextruders können in einer Ebene oder beispielsweise entlang eines Kreisbogens angeordnet sein. Vorzugsweise sind die Förderwellen im Gehäuse längs eines geschlossenen Kreises mit gleichem Zentriwinkelabstand angeordnet.

Das heißt, das Gehäuse besteht aus einem Außengehäuse und einem Gehäusekern, wobei das Außengehäuse an seiner Innenseite und der Gehäusekern an seiner Außenseite mit achsparallelen konkaven Kreissegmenten versehen sind, deren Kreismittelpunkt in der Zylinderfläche des Kreises liegt, auf dem sich die Achsen der Förderwellen befinden.

Das Querschnittsprofil der Förderwellen kann aus drei Kreisbögen gebildet sein, von denen zwei dem Außendurchmesser bzw. dem Kreuzdurchmesser der Welle entsprechen, während der dritte Kreisbogen einen Durchmesser hat, der dem Achsabstand zweier Förderwellen entspricht. Das Querschnittsprofil der Förderwellen kann auch aus vier und mehr Kreisbögen mit stetig differenzierten Profilkurven gebildet sein.

Die Förderwellen können durch Schneckenwellen und/oder Knetblöcke gebildet sein, vorzugsweise durch Schnecken-Elemente oder Knetblöcke, die zum Beispiel mit einer Keilverzahnung drehfest auf Tragwellen gesteckt sind.

Die erfindungsgemäß ausgebildete Förderwellen können sich über die gesamte Länge des Verfahrensraums des Extruders erstrecken oder nur entlang eines Teils des Verfahrensraumes. Das heißt in einem oder mehreren Bereichen des Verfahrensraumes können die Förderwellen auch so ausgebildet sein, dass alle ihre Kämme nur ein Spiel zur Gehäusebohrung aufweisen, beispielsweise in einem Entgasungsbereich des Verfahrensraumes, z. B. durch entsprechend aufgesteckte Elemente.

Nach der Erfindung wird z. B. bei zweigängigen Förderwellen durch den einen Spalt bildenden Kamm der Förderwellen das fließfähige Material quasi als Band mit einer Breite wie bei einer eingängigen Förderwelle gleicher Steigung unter permanent wechselnden Bedingungen durch den Extruder befördert. Von besonderer Bedeutung ist die Übergabe des fließfähigen Materials auf die in Drehrichtung nachfolgende Welle in dem zwischen den Übergängen zwischen zwei benachbarten Gehäusebohrungen. Das fließfähiges Material abgebende Förderelement und das fließfähiges Material aufnehmende Förderelement kommen sich dort entgegen und bilden jeweils die gegenseitige Innenwand. Kurzfristig wird mit einer Änderung der Strömungsrichtung das ganze Materialvolumen im Zwickelbereich auf gedoppelte Umfangsgeschwindigkeit beschleunigt. Damit entfällt die Schwerwirkung des Kamms zum Gehäuse und die hochwirksamen Dehnströmungen wirken sich gleichmäßig dispergierend auch auf das zusätzlich entstandene Bandvolumen aus. Bei Erreichen der nachfolgenden Gehäusekante an dem Übergang zwischen den beiden Gehäusebohrungen wird das gesamte Material unter erhöhtem Druck unter Generierung neuer Dehnströmungen bei geänderten Strömungsrichtungen auf Umfangsgeschwindigkeit plötzlich wieder abgebremst.

Es ist bekannt, dass zwischen Kamm 0 mit engem Spiel und dem Gehäuse mit reiner Scherströmung der größte Energieanteil im Produkt generiert wird. Dies trägt jedoch nur zur Temperatursteigerung, aber nicht Verbesserung der Produktqualität bei. Erfindungsgemäß hat der eine Kamm einen Spalt zum Gehäuse, so dass 50% als Scherfläche entfallen. Der Schneckenkamm fördert das vor dem Kamm 0 mit engem Spiel zum Gehäuse meist rollende Produkt, auf dem Weg von Zwickel zu Zwickel. Über den Kamm mit wählbarem Spalt zwischen dem Gehäuse kann entweder ein großvolumiger, axialer Stoffaustausch von Gang zu Gang, bis hin zu einer abgestimmten Kombination von Dehn- zu Scherströmung über den Kamm hinweg erfolgen. Mit dem Eintritt der beiden Kämme in das dadurch auch vergrößerte Volumen im Zwickelbereich ändern sich die Verhältnisse grundlegend. Der äußere und der innere Verfahrensraum trifft durch den ersten Kamm getrennt im gespiegelten Zwickelbereich aufeinander. Das abgebende und das aufnehmende Förderelement kommen sich entgegen und bilden in einem allseits konvergenten Raum jeweils die gegenseitige Innenwand. Das ganze Produktvolumen im Zwickelbereich unterliegt augenblicklich Verhältnissen mit doppelter Geschwindigkeit, und fällt mit Erreichen der nachfolgenden Gehäusekante bei geänderten Strömungsrichtungen plötzlich auf Umfangsgeschwindigkeit wieder zurück. Bei einem Extruder mit zwölf Wellen, die längs eines Kreises angeordnet sind, erfolgt dies im äußeren und inneren Verfahrensraum je 12mal in Umfangsrichtung, und ist einfach nach Erfordernis bis auf die ganze Maschinenlänge zu verlängern. Die Anforderungen an den Bedarf wirksamer Oberflächen und Volumen steigen expotentiell, wenn es im Produkt um maximal zulässige Teilchengrößen in µm- oder nm-Größe zu erreichen gilt. Darüber hinaus entscheidet über den Erfolg auch die Verweildauer der benetzten Teilchen im wirksamen Spalt und die Viskosität der kontinuierlichen Phase.

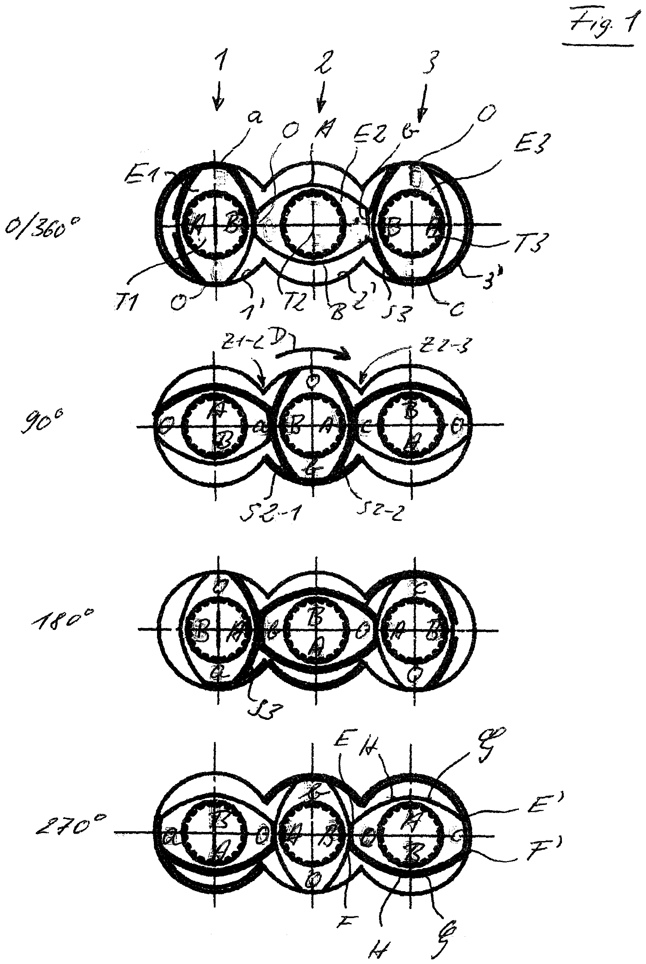

Nachstehend ist die Erfindung anhand der beigefügten Zeichnung beispielhaft näher erläutert. Darin zeigen jeweils schematisch im Querschnitt
Figur 1 einen Extruder mit drei in einem Gehäuse gleichsinnig drehenden zweigängigen Förderelementen mit dem mittleren Förderelement in einer Drehposition von 0/360°, 90°, 120° und 270°;
Figur 2a einen Extruder mit vier in einem Gehäuse gleichsinnig drehenden zweigängigen, längs eines geschlossenen Kreises angeordneten Förderwellen;
Figur 2b die in einer Ebene dargestellten vier Förderwellen nach Figur 2a in einer Drehposition von 0/360°, 90°, 180° und 270°;
   Das Profil der Förderwellen 1 bis 3 wird, wie in Figur 1 für die Förderwelle 3 dargestellt durch einen Kreisbogen e-f gebildet, der den Außendurchmesser der Förderwelle entspricht und einem Kreisbogen E'-F', der gegenüber dem Kreisbogen E-F zur Bildung des Spalts gekappt ist, ferner jede Flanke AB durch einen Kreisbogen G-H der dem Kerndurchmesser entspricht und zwei Kreisbögen E-H und G-E' bzw. F-H und G-F' der dem Achsabstand zwischen benachbarten Förderwellen, also zwischen den Förderwellen, also in dem betrachteten Fall zwischen den Förderwellen entspricht.

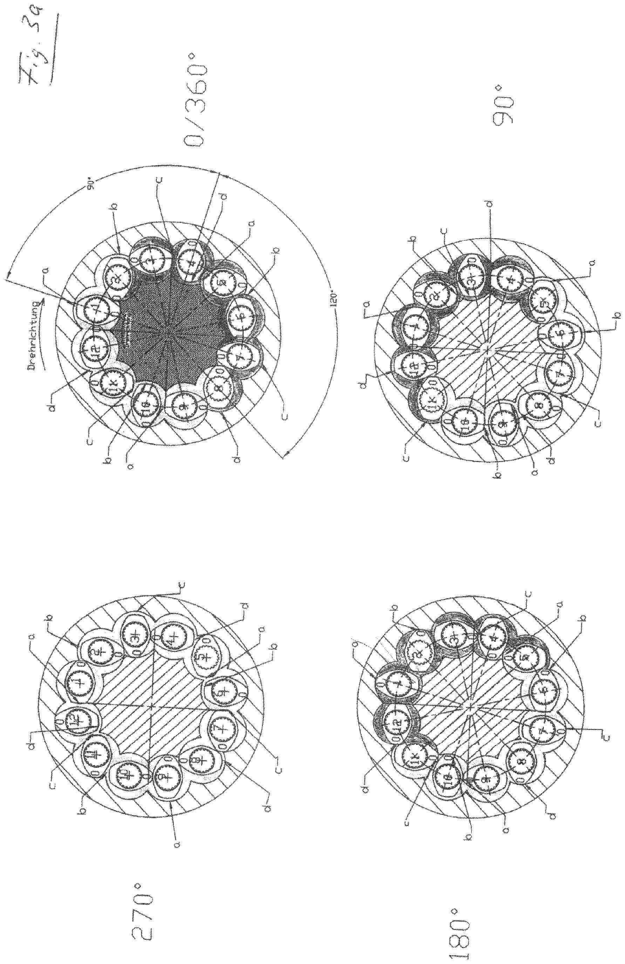

In Figur 3a einen Extruder mit zwölf in einem Gehäuse gleichsinnig drehenden, zweigängigen, längs eines Kreises angeordneten Förderwellen in einer Drehposition von 0/360°, 90°, 180° und 270°; und

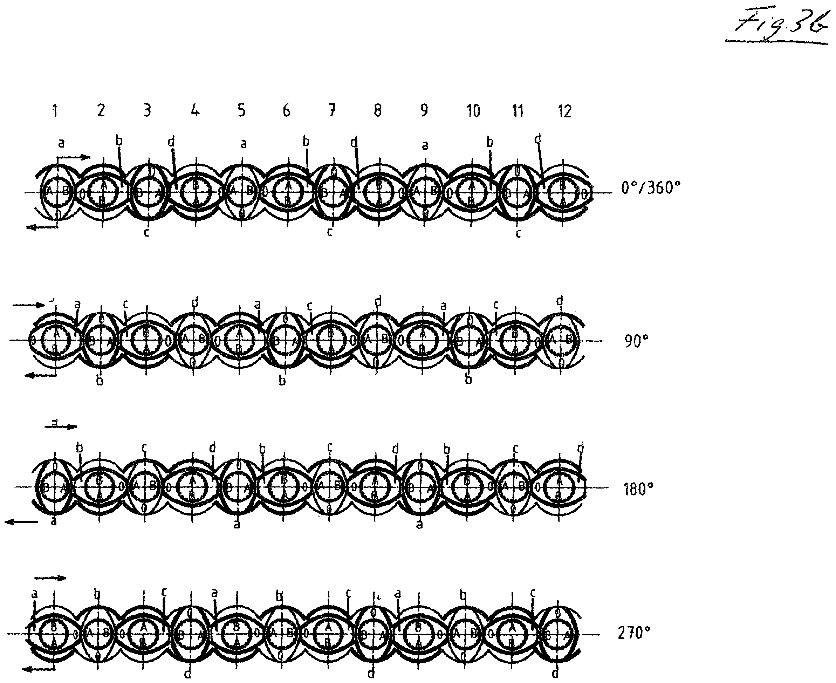

Figur 3b die in einer Ebene dargestellten zwölf Förderwellen nach Figur 3a in der Drehposition von 0/360°, 90°, 180° und 270°.

Gemäß Figur 1 weist der Extruder in einem Gehäuse mit drei Gehäusebohrungen 1', 2', 3' drei parallel angeordnete in Drehrichtung D gleichsinnig drehende, zweigängige Förderwellen 1,2,3 auf, die dicht kämmend ineinander greifen.

Jede Förderwelle 1,2, 3 besteht aus einer Tragwelle T1, T2, T3, auf die mittels Keilverzahnung drehfest zweigängige Förderelemente E1, E2, E3 aufgesteckt sind.

Jede der zweigängigen Förderwellen 1, 2, 3 weist zwei Kämme auf, und zwar einen ersten Kamm a, b, c, welcher gegenüber der Gehäusebohrung 1', 2', 3' einen Spalt bildet und einen zweiten Kamm 0 mit geringen Spiel zur Gehäusebohrung 1', 2', 3'.

Zwischen dem ersten Kamm a, b, c und dem zweiten Kamm 0 weist jede Förderwelle 1, 2, 3 auf beiden Seiten die Flanken A und B auf.

Im Übergang von der Gehäusebohrung 1' zur Gehäusebohrung 2' wird der Zwickel Z 1-2 und im Übergang von der Gehäusebohrung 2' zur Gehäusebohrung 3' der Zwickel Z 2-3 gebildet.

Der erste Kamm b der zweiten Förderwelle 2 ist gegenüber dem ersten Kamm der ersten Förderwelle 1 um 90° versetzt angeordnet, ebenso der erste Kamm C der dritten Förderwelle 3 gegenüber dem ersten Kamm b der zweiten Förderwelle 2.

Betrachtet man die mittlere Förderwelle 2 in der Drehposition 0/360° zusammen mit den Nachbarwellen 1 und 3, so reinigt deren zweiter Kamm O von der Flanke B der Förderwelle 1 das fließfähige Material ab, während durch den Kamm b der zweiten Förderwelle 2 an der Flanke B der dritten Förderwelle 3 im Zwickel Z 2-3 die Schicht S 3 aus dem zu verarbeitenden fließfähigen Material gebildet wird.

In der 90°-Drehposition der Förderwelle wird mit dem ersten Kamm a der Förderwelle 1 an der Flanke B der Förderwelle 2 eine Schicht S 2-1 im Zwickel Z 1-2 aus fließfähigem Material gebildet, während durch den Kamm C der Förderwelle 3 an der Flanke A der Förderwelle 2 eine Materialschicht S 2-2 gebildet wird. Gleichzeitig wird mit dem Kamm B der Förderwelle 2 die Gehäusebohrung 2' mit dem Material beschichtet und mit dem Kamm 0 gereinigt.

In der 180°-Drehposition der Förderwelle 2 bildet der Kamm b der Förderwelle 2 im Zwickel Z 1-2 eine Materialschicht S 3 an der Flanke A der Förderwelle 1, während der Kamm 0 der Förderwelle 2 von der Flanke A der Förderwelle 3 das fließfähige Material im Zwickel Z 2-3 abreinigt.

In der 270° Drehposition der Förderwelle 2 reinigt der Kamm 0 der Förderwelle 1 die Flanke A der Förderwelle 2 in dem Zwickel Z 1-2, während der Kamm 0 der Förderwelle 3 von der Flanke B der Förderwelle 2 das fließfähige Material abreinigt.

Das heißt, die Förderwelle 2 wird an ihren Flanken A, B in der einen Drehposition, nämlich der 90°-Drehposition durch den Spalt bildenden ersten Kamm a, c der beiden benachbarten, um 90° versetzten Förderwellen 1, 2 mit fließfähigem Material beschichtet, wobei die Flanken A, B der zweiten Förderwelle 2 in einer um 180° weiter gedrehten Drehposition, nämlich in der 270°-Drehposition der Förderwelle 2 durch die zweiten Kämme 0 der beiden benachbarten Förderwellen 1, 3 von dem fließfähigem Material wieder abgereinigt wird.

Die Schicht aus fließfähigem Material ist in den Zeichnungen durch dicke Linien veranschaulicht.

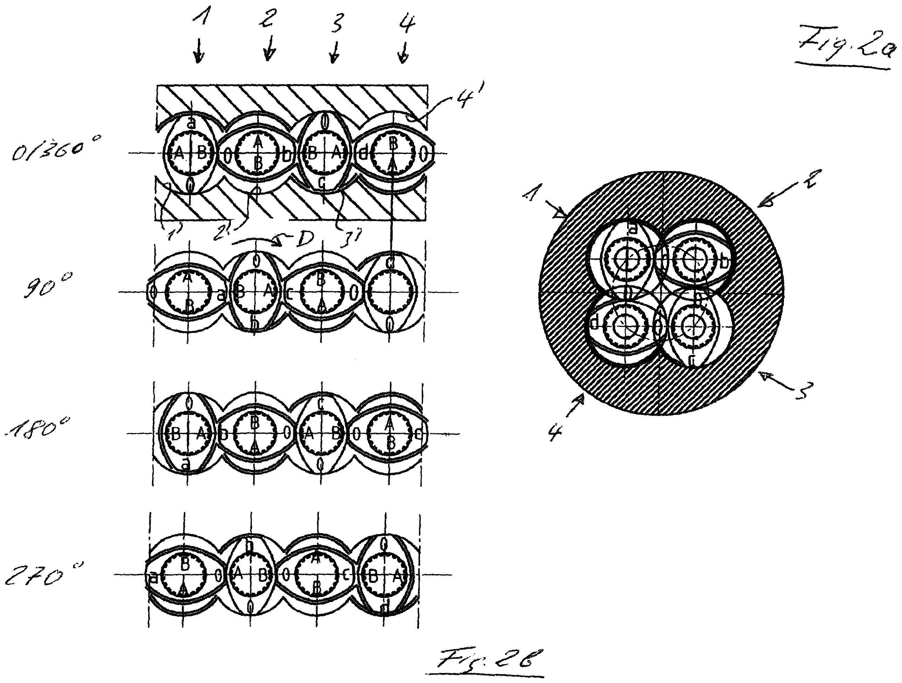

Nach Figur 2a und 2b weist der Extruder 4 Förderwellen 1, 2, 3, 4 auf, deren Drehachsen auf dem geschlossenen Kreis K angeordnet sind.

Entsprechend Figur 2a und 2b weisen die zweigängigen Förderelemente 1 bis 4 jeweils zwei Kämme auf, und zwar einen ersten Kamm a, b, c, d, welcher gegenüber der Gehäusebohrung 1', 2', 3' und 4' einen Spalt bildet, und einen zweiten Kamm 0 mit geringem Spiel zur Gehäusebohrung 1', 2', 3', 4'. Zwischen den ersten Kämmen a, b, c, d und dem zweiten Kamm O weist jedes Förderelement 1 bis 4 auf beiden Seiten die Flanken A und B auf.

Der erste Kamm b der zweiten Förderwelle 2 ist gegenüber dem ersten Kamm a der ersten Förderwelle 1 um 90° versetzt, ebenso der erste Kamm c der dritten Förderwelle 3 gegenüber dem ersten Kamm b der zweiten Förderwelle 2 sowie der erste Kamm d der vierten Förderwelle 4 gegenüber dem ersten Kamm c der dritten Förderwelle 3.

Damit wird jede Förderwelle 2, 3 zwischen zwei Förderwellen 1 und 3, 2 und 4 an ihren Flanken A, B zwischen den beiden Kämmen 0, b; 0 c in einer Drehposition z. B. Welle 3 in der Drehposition 0/360° und Welle 2 in der 90° Drehposition durch die Spalt bildenden ersten Kämme b, d der beiden benachbarten um 90° versetzten Förderwellen 2, 4 bzw. durch die Spalt bildenden ersten Kämme a, c der beiden benachbarten, um 90° versetzten Förderwellen 1, 3 mit fließfähigem Material beschichtet, wobei die Flanken A, B in einer um 180° gedrehten Drehposition (180°-Drehposition der Welle 3 bzw. 270°-Drehposition der Welle 2) durch die zweiten Kämme 0 der beiden benachbarten Förderwellen 2, 4 bzw. 1, 3 von dem fließfähigen Material wieder abgereinigt werden.

Bei der Ausführungsform nach Figur 3a und 3b sind zwölf Förderwellen 1 bis 12 im Gehäuse längs eines geschlossenen Kreises K mit gleichem Zentriwinkelabstand angeordnet. Das heißt, das Gehäuse besteht aus dem Außengehäuse G-1 und dem Gehäusekern G-2. Das Außengehäuse G-1 ist an der Innenseite und der Gehäusekern G-2 an seiner Außenseite mit achsparallelen konkaven Kreissegmenten versehen, deren Kreismittelpunkte in dem Zylinder liegen, auf dem sich die Achsen der Förderwellen 1 bis 12 befinden.

Entsprechend Figur 3a und Figur 3b weist jedes zweigängige Förderelement 1 bis 12 zwei Kämme auf, und zwar einen ersten Kamm a, b, c, d, der gegenüber der Gehäusebohrung einen Spalt bildet und einen zweiten Kamm 0 mit geringem Spiel zur Gehäusebohrung, wobei nach Figur 3a und 3b die Gehäusebohrung durch die beiden Kreissegmente Außengehäuse G-1 und Gehäusekern G-2 gebildet werden, zwischen denen die jeweilige Förderwelle 1 bis 12 gelagert ist.

Wie Figur 3a und 3b zu entnehmen, ist der erste Kamm b der zweiten Förderwelle 2 gegenüber dem ersten Kamm der ersten Förderwelle 1 um 90° versetzt, ebenso der erste Kamm c, der dritten Förderwelle 3 gegenüber dem ersten Kamm b der zweiten Förderwelle 2 und der erste Kamm d der vierten Förderwelle 4 gegenüber dem ersten Kamm c der dritten Förderwelle 3 usw.

Es ist ersichtlich, dass die zwölf Förderwellen 1 bis 12 nach Figur 3a und 3b sich aus drei Gruppen von jeweils vier Förderwellen zusammensetzen, die den vier Förderwellen 1 bis 4 nach Figur 2a und 2b entsprechen. Die zwölf Förderwellen 1 bis 12 werden damit in gleicher Weise beschichtet und wieder abgereinigt, wie im Zusammenhang mit Figur 2a und 2b geschildert.

Gemäß Figur 1 weisen die Förderwellen, wie für die Welle 3 dargestellt, ein Querschnittsprofil auf, das sich aus den Kreisbögen E-F, E'-F', H-G und E-H,
G-E', F-H und G-F' zusammensetzt. Der Kreisbogen E-F und E'-F' verläuft parallel zur Bohrungswand 3'. Der Kreisbogen H-G hat einen Durchmesser, der dem Kerndurchmesser entspricht, und die Kreisbögen E-H, G-E', F-H und G-F' haben einen Durchmesser, der dem Achsabstand der Förderwellen 2 und 3 entspricht. Der Kreisbogen E-F entspricht also dem Außendurchmesser der Welle, während der Kreisbogen E'-F' zur Bildung des Spalts gegenüber dem Kreisbogen E-F gekappt ist. Das Querschnittsprofil kann aber auch durch vier und mehr Kreisbögen mit stetig differenzierten Profilkurven gebildet sein.

## Patentansprüche

1. Mehrwellenextruder zum Verarbeiten von fließfähigem Material mit einem Gehäuse und mehreren parallel angeordneten, gleichsinnig drehenden, dicht kämmenden, mindestens zweigängigen Förderwellen (1 bis 12), die in jeweils einer Bohrung (1' bis 4') in dem Gehäuse geführt sind, wobei jede Förderwelle (1 bis 12) zumindest über einen Teil der Verfahrenslänge des Extruders mit dem Kamm (O) eines ihrer Gänge zur Bohrungswand (1', 2', 3', 4') mit geringem Spiel beabstandet ist,
während zwischen dem Kamm (a, b, c, d) eines anderen ihrer Gänge und der Bohrungswand (1', 2', 3', 4') ein Spalt gebildet ist, **dadurch gekennzeichnet, dass** die Förderwellen (1 bis 12)
zueinander in einem Winkel derart versetzt angeordnet sind, dass jede zwischen zwei Förderwellen (1 bis 12) angeordnete Förderwelle (1 bis 12) durch die Spalt bildenden Kämme (a, b, c, d) der beiden benachbarten Förderwellen (1 bis 12) an ihren Flanken (A, B) zwischen ihren Kämmen (a, b, c, d, 0) mindestens in einer Drehposition mit dem fließfähigen Material beschichtbar sind, welche Flanken (A, B) in mindestens einer weiteren Drehposition der Förderwelle durch die zur Bohrungswand (1', 2', 3', 4') mit Spiel beabstandeten Kämme (0) der beiden benachbarten Förderwellen (1 bis 12) von dem fließfähigen Material wieder abreinigbar sind.

2. Mehrwellenextruder nach Anspruch 1', **dadurch gekennzeichnet, dass** die Förderwellen (1 bis 12) zweigängig ausgebildet und in einem Winkel von 90° zueinander versetzt angeordnet sind, wobei jede zwischen zwei Förderwellen (1 bis 12) angeordnete Förderwelle (1 bis 12) an ihren Flanken (A, B) zwischen den beiden Kämmen (a, b, c, d, 0) in einer Drehposition durch den Spalt bildenden ersten Kamm (a, b, c, d) der beiden benachbarten, um 90° versetzten Förderwellen (1 bis 12) mit dem fließfähigen Material beschichtbar ist, welche Flanken (A, B) in einer um 180° gedrehten Drehposition der Förderwelle (1 bis 12) durch die zur Bohrungswand (1', 2', 3', 4') mit Spiel beabstandeten zweiten Kämme (0) der beiden benachbarten Förderwellen (1 bis 12) von dem fließfähigen Material wieder abreinigbar sind.

3. Mehrwellenextruder nach Anspruch 1 oder 2, **dadurch gekennzeichnet, dass** der Spalt, der zwischen dem einem bzw. ersten Kamm (a, b, c, d) jeder Förderwelle und der Bohrungswand (1', 2', 3', 4') gebildet ist, größer als das Spiel zwischen dem wenigstens einen weiteren bzw. zweiten Kamm (O) der Förderwelle (1 bis 12) und der Bohrungswand (1', 2', 3', 4') und kleiner als die Gangtiefe der Förderwelle (1 bis 12) ist.

4. Mehrwellenextruder nach einem der vorstehenden Ansprüche, **dadurch gekennzeichnet, dass** das Spiel zwischen dem wenigstens einen Kamm bzw. ersten Kamm (a, b, c, d) jeder Förderwelle (1 bis 12) und der Bohrungswand (1', 2', 3', 4') höchstens drei Prozent des Bohrungsdurchmessers beträgt.

5. Mehrwellenextruder nach einem der vorstehenden Ansprüche, **dadurch gekennzeichnet, dass** die Förderwellen (1 bis 12) im Gehäuse längs eines geschlossenen Kreises mit gleichem Zentriwinkelabstand angeordnet sind.

6. Mehrwellenextruder nach Anspruch 5, **dadurch gekennzeichnet, dass** wenigstens vier Förderwellen oder eine einem Vielfachen von vier entsprechende Anzahl von Förderwellen (1 bis 12) vorgesehen sind.

7. Mehrwellenextruder nach einem der vorstehenden Ansprüche, **dadurch gekennzeichnet, dass** die Förderwellen (1 bis 12) durch Schneckenwellen und/oder Knetblöcke gebildet sind.

## Claims

1. A multi-shaft extruder for the processing of free-flowing material having a barrel and a plurality of co-rotating, tightly intermeshing conveyor shafts (1 to 12) arranged in parallel which have at least two flights and are each guided in a bore (1' to 4') in the barrel, wherein each conveyor shaft (1 to 12) is spaced with the ridge (O) of one of its flights from the bore wall (1', 2', 3', 4') by a small clearance over at least part of the processing length of the extruder, whereas a gap is formed between the ridge (a, b, c, d) of another of its flights and the bore wall (1', 2', 3', 4'), **characterized in that** the conveyor shafts (1 to 12) are arranged in an offset manner relative to each other at an angle such that, at least in one rotational position, each conveyor shaft (1 to 12) arranged between two conveyor shafts (1 to 12) is coatable with the free-flowing material on its flanks (A, B) between its ridges (a, b, c, d, 0) by means of the gap-forming ridges (a, b, c, d) of the two adjacent conveyor shafts (1 to 12), with the said flanks (A, B) being cleanable again from the free-flowing material by means of the ridges (O) of the two adjacent conveyor shafts (1 to 12) spaced from the bore wall (1', 2', 3', 4') by a clearance in at least one further rotational position of the conveyor shaft.

2. The multi-shaft extruder according to claim 1, **characterized in that** the conveyor shafts (1 to 12) are designed with two flights and arranged in an offset manner relative to each other at an angle of 90 degrees, wherein, in a rotational position, each conveyor shaft (1 to 12) arranged between two conveyor shafts (1 to 12) is coatable with the free-flowing material on its flanks (A, B) between the two ridges (a, b, c, d, O) by means of the gap-forming first ridge (a, b, c, d) of the two adjacent conveyor shafts (1 to 12) offset by 90 degrees, with the said flanks (A, B) being cleanable again from the free-flowing material by means of the second ridges (O) of the two adjacent conveyor shafts (1 to 12) spaced from the bore wall (1', 2', 3', 4') by a clearance in a rotational position of the conveyor shaft (1 to 12) rotated by 180 degrees.

3. The multi-shaft extruder according to claim 1 or 2, **characterized in that** the gap which is formed between the one and first ridge (a, b, c, d), respectively, of each conveyor shaft and the bore wall (1', 2', 3', 4') is larger than the clearance between the at least one further and second ridge (O), respectively, of the conveyor shaft (1 to 12) and the bore wall (1', 2', 3', 4') and smaller than the flight depth of the conveyor shaft (1 to 12).

4. The multi-shaft extruder according to any of the preceding claims, **characterized in that** the clearance between the at least one ridge and first ridge (a, b, c, d), respectively, of each conveyor shaft (1 to 12) and the bore wall (1', 2', 3', 4') is not more than three percent of the diameter of the bore.

5. The multi-shaft extruder according to any of the preceding claims, **characterized in that** the conveyor shafts (1 to 12) are arranged in the barrel along a closed circle at the same central angle distance.

6. The multi-shaft extruder according to claim 5, **characterized in that** at least four conveyor shafts or a number of conveyor shafts (1 to 12) corresponding to a multiple of four are provided.

7. The multi-shaft extruder according to any of the preceding claims, **characterized in that** the conveyor shafts (1 to 12) are formed by worm shafts and/or kneading blocks.

## Revendications

1. Extrudeuse à plusieurs vis pour traiter du matériau fluide, comportant un boîtier et plusieurs vis de refoulement (1 à 12) à au moins deux filets, agencées parallèlement, tournant dans le même sens et s'engrenant étroitement, qui sont chacune guidées dans un alésage (1' à 4') dans le boîtier, chaque vis de refoulement (1 à 12) étant, au moins sur une partie de la longueur de travail de l'extrudeuse, espacée, par rapport à la paroi de l'alésage (1', 2', 3', 4'), avec un léger jeu par une dent (O) de l'un de ses filets tandis qu'une fente est formée entre la dent (a, b, c) d'un autre de ses filets et la paroi de l'alésage (1', 2', 3', 4'), **caractérisée en ce que** les vis de refoulement (1 à 12) sont agencées de manière décalée les unes par rapport aux autres sous un angle tel que chaque vis de refoulement (1 à 12) agencée entre deux vis de refoulement (1 à 12) peut, par les dents (a, b, c, d) des deux vis de refoulement adjacentes (1 et 12) qui forment la fente, être revêtue du matériau fluide sur ses flancs (A, B) entre ses dents (a, b, c, d, O) au moins dans une position de rotation, lesdits flancs (A, B) pouvant, dans au moins une autre position de rotation de la vis de refoulement, être à nouveau nettoyés par l'enlèvement du matériau fluide par les dents (O) des deux vis de refoulement voisines (1 à 12) écartées de la paroi de l'alésage (1', 2', 3', 4') par un jeu.

2. Extrudeuse à plusieurs vis selon la revendication 1, **caractérisée en ce que** les vis de refoulement (1 à 12) sont réalisées à deux filets et agencées de manière décalée les unes par rapport aux autres sous un angle de 90°, chaque vis de refoulement (1 à 12) agencée entre deux vis de refoulement (1 à 12) peut, par la première dent (a, b, c, d) formant la fente, des deux vis de refoulement (1 à 12) décalées de 90° être revêtue du matériau fluide sur ses flancs (A, B) entre les deux dents (a, b, c, d, O) dans une position de rotation, lesdits flancs (A, B) pouvant, dans une position de rotation tournée de 180°, de la vis de refoulement (1 à 12), être à nouveau nettoyés par l'enlèvement du matériau fluide par la deuxième dent (O) des deux vis de refoulement voisines (1 à 12) écartée de la paroi de l'alésage (1', 2', 3', 4') par un jeu.

3. Extrudeuse à plusieurs vis selon la revendication 1 ou 2, **caractérisée en ce que** la fente qui est formée entre ladite une dent ou respectivement la première dent (a, b, c, d) de chaque vis de refoulement et la paroi de l'alésage (1', 2', 3', 4') est plus grande que le jeu entre ladite au moins une autre dent ou respectivement la deuxième dent (O) de la vis de refoulement (1 à 12) et la paroi de l'alésage (1', 2', 3', 4') et plus petite que la profondeur de filet de la vis de refoulement (1 à 12).

4. Extrudeuse à plusieurs vis selon l'une des revendications précédentes, **caractérisée en ce que** le jeu entre ladite au moins une dent ou respectivement la première dent (a, b, c, d) de chaque vis de refoulement (1 à 12) et de la paroi de l'alésage (1', 2', 3', 4') est au plus de trois pourcent du diamètre de l'alésage.

5. Extrudeuse à plusieurs vis selon l'une des revendications précédentes, **caractérisée en ce que** les vis de refoulement (1 à 12) sont agencées dans le boîtier le long d'un cercle fermé avec la même distance par rapport à l'angle au centre.

6. Extrudeuse à plusieurs vis selon la revendication 5, **caractérisée en ce qu'**il est prévu au moins quatre vis de refoulement ou un nombre de vis de refoulement (1 à 12) correspondant à un multiple de quatre.

7. Extrudeuse à plusieurs vis selon l'une des revendications précédentes, **caractérisée en ce que** les vis de refoulement (1 à 12) sont formées par des arbres à vis sans fin et/ou par des blocs de pétrissage.
